# EUROPEAN PATENT APPLICATION

(11) **EP 2 752 732 A2**
(43) Date of publication of application: **09.07.2014**
(21) Application number: 13194875.4
(22) Date of filing: 28.11.2013
(51) Int. Cl.: G06F 3/01, G06F 3/0482, G06F 3/0481

(54) **Electronic apparatus and control method thereof**

(30) Priority: 07.01.2013 KR 20130001771
(71) Applicant: Samsung Electronics Co., Ltd, Gyeonggi-do 443-742 (KR)
(72) Inventor: Lee, Dong-heon, Seoul (KR); Kim, Jung-geun, Gyeonggi-do (KR); Jang, Sung-hyun, Seoul (KR); Kim, Jae-kwon, Gyeonggi-do (KR)
(74) Representative: Hewett, Jonathan Michael Richard

(57) **Abstract**

A control method of an electronic apparatus is provided, including displaying a pointing graphical user interface (GUI) which performs a pointing function in a pointing control mode, converting the pointing GUI into a four-directional GUI to control four-directional movement of a predetermined object and changing to the four-directional control mode when a predetermined event occurs, and controlling the four-directional movement of the predetermined object according to manipulation of the four-directional GUI.

## Description

The present invention relates to an electronic apparatus and a control method thereof, and more particularly, to an electronic apparatus which provides a plurality of operating modes, and a control method thereof.

Due to development of electronic technology, diverse kinds of electronic apparatuses have been developed and distributed. In particular, diverse types of electronic apparatuses including a television (TV) have been used in a home. The functions of electronic apparatuses have increased due to user demands. For example, TVs are now capable of providing internet services. In particular, TVs support internet service by providing access to the internet. In addition, users can view a large number of digital broadcasting channels through the TV.

Accordingly, diverse input methods are required to efficiently use various functions of electronic apparatuses. For example, an input method using a remote controller, a mouse, or a touch pad is used with electronic apparatuses.

However, it might be difficult to effectively use the various functions of the electronic apparatus using only a simple input method. For example, if all of the functions of the electronic apparatus are controlled only by a remote controller, the number of buttons on the remote controller will increase. With the increase in the number of buttons on a remote controller, it becomes difficult for general users to become accustomed to operating the remote controller. In addition, if a variety of different menus are displayed on the screen, it is inconvenient for the user to find and select a desired menu. In addition, it is inconvenient for the user to select a desired menu in a complicated menu tree.

In order to overcome such inconveniences, motion recognition technology has been recently developed so that electronic apparatuses can be controlled more conveniently and can be controlled based on user intuition. That is, the technology of controlling an electronic apparatus by recognizing motions made by the user has been increasingly used.

In the related-art motion recognition technology, a pointer displayed on the screen moves according to a motion, but in this case, it is difficult to support an operation while using four directional buttons of a controller.

The exemplary embodiments of the present invention provide an electronic apparatus capable of easily changing a pointing control mode into a four-directional control mode, and a control method thereof.

According to an aspect of an exemplary embodiment, a control method of an electronic apparatus which supports a pointing control mode and a four-directional control mode includes displaying a pointing graphical user interface (GUI) which performs a pointing function in the pointing control mode on a display, converting the pointing GUI into a four-directional GUI to control four-directional movement of a predetermined object and changing to the four-directional control mode when a predetermined event occurs, and controlling the four-directional movement of the predetermined object according to manipulation of the four-directional GUI.

The predetermined object may be an object to select an item according to manipulation of the four-directional GUI in the four-directional control mode.

The predetermined event may be one of an event in which a mode conversion menu is selected according to a user command, and an event in which a screen including the predetermined object is displayed.

The method may further include converting the four-directional GUI into the pointing GUI and changing to the pointing control mode when the four-directional GUI is located on an item which is controllable in the pointing control mode.

The four-directional GUI may include an up button, a down button, a right button, a left button and a selection button.

The method may further include highlighting one of the up button, down button, right button, left button and selection button of the four-directional GUI when a virtual pointer is positioned on one of the up button, down button, right button, left button and selection button.

The method may further include moving the four-directional GUI to a location of the virtual pointer when the virtual pointer is positioned outside of the four-directional GUI when displayed on the display.

The pointing GUI and the four-directional GUI may be controlled according to a user's motion command.

According to another aspect of an exemplary embodiment, an electronic apparatus which supports a pointing control mode and a four-directional control mode includes a display which displays a pointing graphical user interface (GUI) which performs a pointing function in the pointing control mode, a user interface which receives a command, and a controller which converts the pointing GUI into a four-directional GUI to control four-directional movement of a predetermined object and changes into the four-directional control mode when a predetermined event occurs, and which controls the four-directional movement of the predetermined object according to manipulation of the four-directional GUI.

The predetermined selects an item displayed on the display according to manipulation of the four-directional GUI in the four-directional control mode.

The predetermined event may be one of an event in which a mode conversion menu is selected according to a user command, and an event in which a screen including the predetermined object is displayed.

When the four-directional GUI is located on an item which is controllable in the pointing control mode, the controller may change to the pointing control mode and convert the four-directional GUI to the pointing GUI.

The four-directional GUI may include an up button, a down button, a right button, a left button, and a selection button, and the controller may highlight one of the up button, the down button, the right button, the left button, and the selection button when a virtual pointer is positioned on one of the up button, the down button, the right button, the left button, and the selection button.

When the virtual pointer is positioned outside of the four-directional GUI, the controller may move the four-directional GUI to a location of the virtual pointer.

The pointing GUI and the four-directional GUI may be controlled according to a user's motion command.

According to the various exemplary embodiments, the pointing control mode may easily change to the four-directional control mode.

Additional and/or other aspects and advantages will be set forth in part in the description which follows and, in part, will be obvious from the description, or may be learned by practice of the exemplary embodiments.

The above and/or other aspects will be more apparent by describing certain exemplary embodiments with reference to the accompanying drawings, in which:
FIG. 1 is a schematic diagram of an electronic apparatus according to an exemplary embodiment;
FIG. 2 is a schematic block diagram of a configuration of an electronic apparatus according to an exemplary embodiment;
FIG. 3 is a block diagram of a configuration of an electronic apparatus according to another exemplary embodiment;
FIG. 4 illustrates a configuration of software stored in a storage according to an exemplary embodiment;
FIG. 5 illustrates a method for providing a user interface (UI) according to an exemplary embodiment;
FIGs. 6A-6C illustrate a method for manipulating a 4-directional graphical user interface (GUI) according to an exemplary embodiment;
FIGs. 7A and 7B illustrate a method for providing a UI according to another exemplary embodiment; and
FIG. 8 is a flow chart illustrating a control method of an electronic apparatus according to an exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding. Thus, it is apparent that the exemplary embodiments can be carried out without those specifically defined matters. Also, well-known functions or constructions are not described in detail since they would obscure the exemplary embodiments with unnecessary detail.

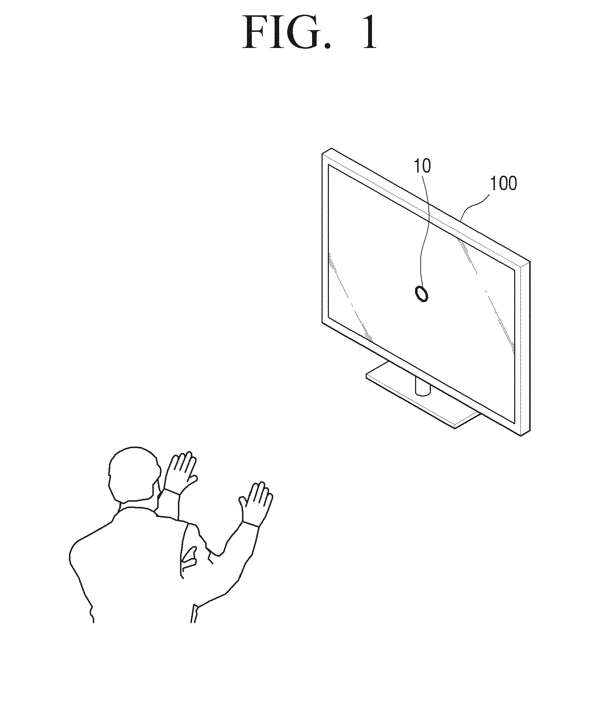

FIG. 1 is a schematic diagram of an electronic apparatus according to an exemplary embodiment.

The electronic apparatus 100 according to an exemplary embodiment may be implemented as a digital TV, or as a displayable device such as personal computer (PC) monitor.

The electronic apparatus 100 may support a pointing control mode and a four-directional control mode. In the pointing control mode, an item is selected or executed by moving a pointer displayed on the screen. In the four-directional control mode, an item is selected or executed by moving an object 10 (e.g., a highlight or a focus) which is located on an item on the screen according to a four-directional control of a controller.

In particular, the electronic apparatus 100 may control a mobile state of the pointer displayed in the pointing control mode or a mobile state of the object displayed in the four-directional control mode.

Accordingly, the electronic apparatus 100 may be implemented in a device which senses the user's motion and is controlled according to the sensed motion. More specifically, the electronic apparatus 100 senses the user's motion, generates motion information regarding the sensed motion, converts the motion information into a control signal to control the electronic apparatus 100, and performs a function based on the control signal.

Specific operations of the electronic apparatus 100 are described below with reference to the drawings.

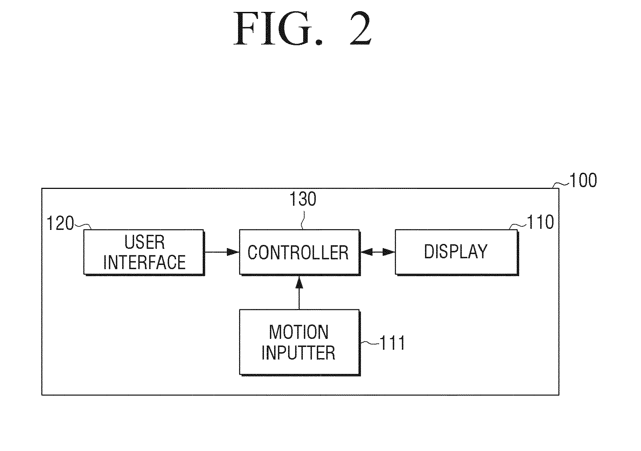

FIG. 2 is a schematic block diagram of a configuration of the electronic apparatus 100 according to an exemplary embodiment. With reference to FIG. 2, the electronic apparatus 100 may include a display 110, a user interface 120, and a controller 130.

The electronic apparatus 100 may be a smart TV, but this is merely an example. The electronic apparatus 100 can be implemented as various types of electronic devices such as a smart phone, a tablet PC, and a notebook computer.

The display 110 displays an image signal input from diverse sources. For example, the display 110 may display an image corresponding to a broadcast signal received through a broadcast receiver, or image data (e.g., moving image) input through an external terminal inputter (not shown).

In addition, the display 110 may display a pointing graphical user interface (GUI) which performs a pointing function in the pointing control mode. For example, the display 110 may display a GUI used for pointing which is of a circular form, but the form of the GUI used for pointing is not limited thereto. The GUI used for pointing or pointing GUI may be of various forms such as an arrow and a hand.

In addition, the display 110 may display a four-directional GUI to control four-directional movements of a predetermined object in the four-directional control mode. For example, the display 110 may display a four-directional GUI which includes up, down, right and left buttons and a selection or enter button.

The GUI used for pointing or pointing GUI and the four-directional GUI may be displayed in an on-screen display (OSD) format.

The display 110 may be implemented with a liquid crystal display (LCD) panel or organic light emitting diodes (OLED), but is not limited thereto. In particular, the display 110 may be implemented as a touch screen which constitutes a layer structure with a touch pad. In this case, the display 110 may be used as a user interface 120 which will be described below, as well as an output device. The touch screen may sense touch input pressure as well as touch input position and area. However, the user interface 120 may also be separate from the display 110.

The user interface 120 receives various user commands.

In particular, the user interface 120 may receive a user command to change the pointing control mode into the four-directional control mode. For example, the user interface 120 may receive a user command to select a predetermined menu item for mode conversion.

In addition, the user interface 120 may receive a command to move a pointing GUI, a command to select an item on which the pointing GUI is located in the pointing control mode, a command to select a button on the four-directional GUI, a command to manipulate the selected button, and a command to select an item on which an object is located by manipulation of the four-directional GUI in the four-directional control mode. For example, such user commands may be input by the user's motion.

In this case, the user interface 120 may be implemented with a motion inputter 111 which receives an image signal (e.g., consecutive frames) obtained by taking pictures of the user's motion and provides the image signal to the controller 130. For example, the motion inputter 111 may be implemented with a camera which includes a lens and an image sensor to capture a user motion. In addition, the motion inputter 111 may be integrally formed with or be formed separate from the electronic apparatus 100. The separate motion inputter may be connected to the electronic apparatus 100 through a wired or wireless network.

The controller 130 controls the display 110 and the user interface 120. The controller 130 may include a central processing unit (CPU), a module for controlling the electronic apparatus 100, a read-only memory (ROM) for storing data, and a random access memory (RAM).

In particular, in the pointing control mode, when a predetermined event occurs, the controller 130 converts the pointing GUI into the four-directional GUI for controlling four-directional movements of the predetermined object and displays the four-directional GUI. The predetermined object may be a highlighter or a focus which is positioned on an item on the display. The highlighter or focus is moved onto another item, and selects the item according to the user's manipulation, but is not limited thereto.

The predetermined event may be an event in which a mode conversion menu is selected according to a user command, and an event in which a screen including the predetermined object to select an item in the four-directional control mode is displayed. For example, the latter is the case of displaying an application screen for locating a focus on an item on the electronic apparatus and controlling the focus according to four-directional manipulation.

In addition, the controller 130 may control four-directional movements of the predetermined object based on manipulation of the four-directional GUI according to a user command. For example, in the state that the focus which moves according to manipulation of the four-directional GUI is located on an item, when the up button of the four-directional GUI is selected, the controller 130 moves the focus to another item which is located above the item on which the focus is currently located.

In addition, the controller 130 may select an item on which the predetermined object is located, according to a user command in the four-directional control mode. For example, in the state that the focus is located on a particular item, when the selection button on the four-directional GUI is selected, the controller 130 may select and execute the particular item.

More specifically, when one of the buttons included on the four-directional GUI is selected, the controller 130 may highlight the selected button.

The four-directional GUI may include a virtual pointer for selecting one of the buttons included on the four-directional GUI. In an exemplary embodiment, the virtual pointer is not necessarily displayed on the screen.

In this case, the controller 130 may select one of the up, down, right and left buttons and the selection button according to movements of the virtual pointer within the four-directional GUI, and may highlight the selected button. For example, when the virtual pointer on the four-directional GUI moves to the up button according to a user command, the controller 130 highlights the up button.

In addition, when the virtual pointer moves outside the four-directional GUI, the controller 130 may move the four-directional GUI. For example, when the virtual pointer on the four-directional GUI moves out of the four-directional GUI according to a user command, the controller 130 moves the four-directional GUI the location of the moved virtual pointer.

In addition, when the four-directional GUI is located on an item which can be controlled in the pointing control mode, the controller 130 may convert the four-directional GUI into the pointing GUI and display the pointing GUI. For example, when the four-directional GUI moves to a menu item which is displayed outside the application screen controllable in the four-directional control mode according to a user command and which can be selected by the pointer, the controller 130 may convert the four-directional GUI into the pointing GUI, and display the pointing GUI.

The pointing GUI and the four-directional GUI may be controlled by the user's motion as described above.

When the user's motion is input through the motion inputter 111, the controller 130 recognizes the motion using a motion sensing module and a motion database. In the motion recognition, a motion recognition module separates a background and a hand area (e.g., open a hand, cup a hand or make a fist) from an image (e.g., consecutive frames) corresponding to the user's motion input through the motion inputter 111 and recognizes the consecutive movements of the hand. If the user's motion is input, the controller 130 stores the received image by the frame, and senses an object (e.g., the user's hand) which is a subject of the user's motion, using the stored frames. The controller 130 detects the object by sensing at least one of shape, color, and movement of the object. The controller 130 can track the movements of the detected object using the location of the object included in the plurality of frames.

The controller 130 determines a motion according to a shape and movement of the tracked object. For example, the controller 130 determines the user's motion using at least one of change in a shape of the object, speed, location and direction. The user's motion may include a grab motion, which is a motion of squeezing the user's hand, a pointing motion, which is a motion of moving the displayed pointer by a hand, a slap motion, which is a motion of moving a hand in one direction at a predetermined speed or more, a shake motion, which is a motion of shaking a hand side to side or up and down, and a rotation motion, which is a motion of rotating a hand. The technical ideas of the exemplary embodiment may be applied to other motions which are not mentioned above. For example, a spread motion, which is a motion of opening a hand that the user had in a fist, may be further included.

The controller 130 may move the pointing GUI according to the recognized user's motion or execute the item selected by the pointing GUI. For example, the controller 130 may move the pointing GUI to the left based on a user's motion of moving their right or left hand, whichever is controlling the pointing GUI, to the left.

In addition, the controller 130 may select a particular button on the four-directional GUI according to the recognized user's motion or execute an item which is selected by the focus according to manipulation of the selected button. For example, the controller 130 selects the up button by moving the virtual pointer on the four-directional GUI according to the user's motion of moving the hand upwards, and executes the up button according to a grab motion of squeezing the hand when the up button is highlighted so that the focus on a particular item can move to an item which is located above the particular item.

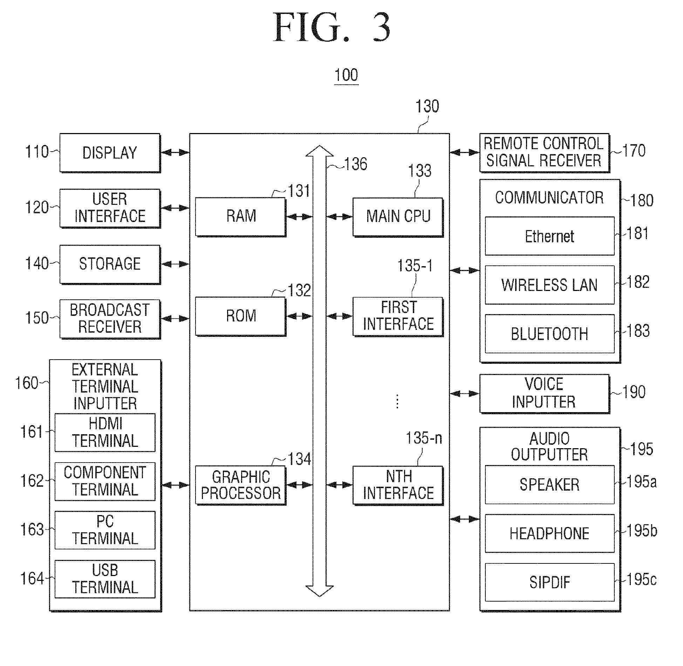

FIG. 3 is a block diagram of a configuration of an electronic apparatus 100 according to another exemplary embodiment. With reference to FIG. 3, the electronic apparatus 100 may include a display 110, a user interface 120, a controller 130, a storage 140, a broadcast receiver 150, an external terminal inputter 160, a remote control signal receiver 170, a communicator 180, a voice inputter 190, and an audio outputter 195.

From among the components shown in FIG. 3, a detailed description of the portions which overlap with the components shown in FIG. 2 are not repeated.

The controller 130 may include a RAM 131, a ROM 132, a main CPU 133, a graphic processor 134, first to n^{th} interfaces 135-1 to 135-n, and a bus 136.

The RAM 131, the ROM 132, the main CPU 133, the graphic processor 134, and the first to n^{th} interfaces 135-1 to 135-n may be connected to one another via the bus 136.

The first to n^{th} interfaces 135-1 to 135-n are connected to the aforementioned components. One of the interfaces may be a network interface that is connected to an external device through a network.

The main CPU 133 accesses the storage 140 and boots up the system using the operating system (OS) stored in the storage 140. In addition, the main CPU 133 performs diverse operations using diverse programs, content, and data which are stored in the storage 140.

The ROM 132 stores a set of commands for booting up the system. When a turn-on command is input and the power is supplied, the main CPU 133 copies an operating system (OS) stored in the storage 140 to the RAM 131 and executes the OS according to the commands stored in the ROM 132 so that the system can boot up. When the boot-up is complete, the main CPU 133 copies various application programs, which are stored in the storage 140, to the RAM 131, and executes the copied application programs so that various operations can be performed.

The graphic processor 134 generates a screen including diverse objects, such as an icon, an image, and text, using an operator (not shown) and a renderer (not shown). The operator operates property values of each object, such as a coordinate value, shape, size and color, according to a layout of the screen. The renderer generates a screen having diverse layouts including the objects based on the property values operated by the operator. The screen generated by the renderer is displayed on a display area of the display 110.

The storage 140 stores diverse data and programs to drive and control the electronic apparatus 100. The storage 140 stores a motion recognition module for recognizing motion input through the motion inputter.

In addition, the storage 140 may include a motion database. The motion database is database for recording a predetermined motion, such as a user hand motion, and a motion task, which is an operation associated with the motion, which is matched with the predetermined hand motion.

The broadcast receiver 150 externally receives a broadcast signal via a cable or wirelessly. The broadcast signal includes video, audio, and additional data (e.g., electronic program guide (EPG)). The broadcast receiver 150 may receive a broadcast signal from diverse sources such as terrestrial broadcasting, cable broadcasting, satellite broadcasting, and internet broadcasting.

The external terminal inputter 160 receives video data (e.g., moving images and pictures) and audio data (e.g., music) from outside of or external to the electronic apparatus 100. The external terminal inputter 160 may include at least one of a high-definition multimedia interface (HDMI) input terminal, a component input terminal, a PC input terminal, and a universal serial bus (USB) input terminal. The remote control signal receiver 170 receives a remote control signal from an external remote controller. The remote control signal receiver 170 may receive a remote control signal even when the electronic apparatus 100 is in a voice task mode or a motion task mode.

The communicator 180 may connect the electronic apparatus 100 with an external device (e.g., a server) by control of the controller 130. The controller 130 may download an application from the external apparatus connected through the communicator 180 or may perform web browsing. The communicator 180 may provide at least one of an Ethernet 181, a wireless local area network (LAN) 182, and a Bluetooth 183.

The voice inputter 190 receives a voice input uttered by the user. The voice inputter 190 converts an input voice signal into an electrical signal and outputs the electrical signal to the controller 130. The voice inputter 190 may be implemented with a microphone. The voice inputter 190 may be integrally formed with or may be separate from the electronic apparatus 100. The separate voice inputter 190 may be connected to the electronic apparatus 100 through a wired or wireless network.

The audio outputter 195 outputs sound corresponding to a broadcast signal according to control of the controller 130. The audio outputter 195 may include at least one of a speaker 195a, a headphone output terminal 195b, and a Sony Philips digital interface (S/PDIF) output terminal 195c.

When the controller 130 receives the user's voice from the voice inputter 190, the controller 130 recognizes the voice using a voice recognition module and a voice database. Voice recognition is divided into isolated word recognition for recognizing the uttered voice by dividing terms, continuous speech recognition for recognizing continuous terms, sentences, and dialogic voice, and keyword spotting, which is an intermediate form of isolated word recognition, and continuous speech recognition, for detecting and recognizing a predetermined keyword.

If the user's voice is input, the controller 130 determines a voice section by detecting a beginning and an end of the voice uttered by the user in the input voice signal. The controller 130 calculates an energy of the input voice signal, classifies the energy level of the voice signal according to the calculated energy, and detects the voice section through dynamic programming. The controller 130 detects a phoneme, which is the smallest unit of sound, from the voice signal in the detected voice section based on acoustic model, and generates phonemic data. The controller 130 generates text information by applying a hidden Markov model (HMM) to the generated phonemic data. However, this method for recognizing the user's voice is merely an example. It is also possible to recognize the user's voice using other methods. Consequently, the controller recognizes the user's voice included in the voice signal.

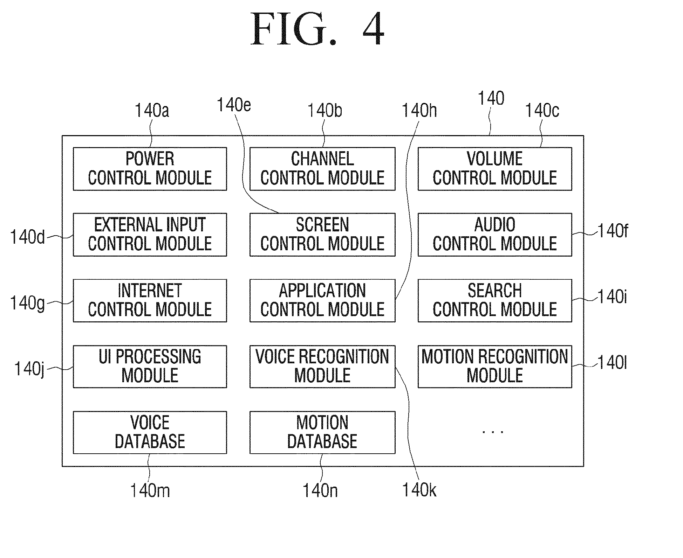

FIG. 4 illustrates a configuration of software stored in a storage 140 according to an exemplary embodiment. As shown in FIG. 4, the storage 140 may include a power control module 140a, a channel control module 140b, a volume control module 140c, an external input control module 140d, a screen control module 140e, an audio control module 140f, an internet control module 140g, an application module 140h, a search control module 140i, a user interface (UI) processing module 140j, a voice recognition module 140k, a motion recognition module 140l, a voice database 140m, and a motion database 140n. These modules 140a to 140n may be implemented with software to perform a power control function, a channel control function, a volume control function, an external input control function, a screen control function, an audio control function, an internet control function, an application executing function, a search control function, and a UI processing function, respectively. The controller 130 performs the corresponding function by executing the software stored in the storage 140.

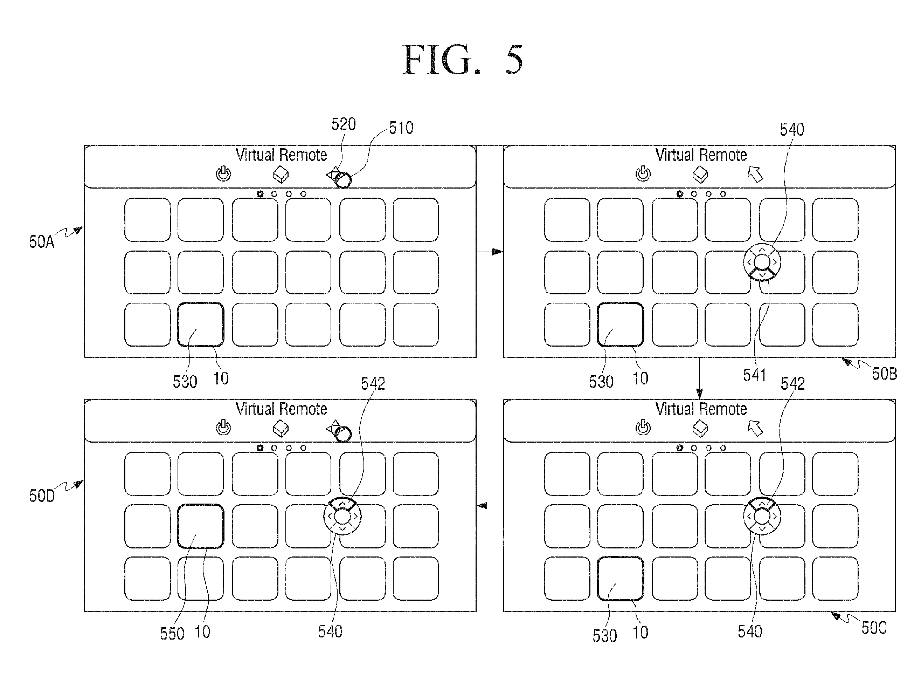

A method for providing a UI according to diverse exemplary embodiments is described below with reference to FIGs. 5 to 7.

FIG. 5 illustrates a method for providing a UI according to an exemplary embodiment. In the pointing control mode, when a screen requiring four-directional control is displayed as shown in FIG. 50A, the user may select a mode conversion menu 520 so that a displayed pointing GUI 510 may change to a four-directional GUI 540. Herein, the screen requiring four-directional control is a screen on which a focus 10 moves and selects items by four-directional control as shown in FIG. 5. For example, the screen requiring four-directional control may be an application executing screen which is controlled in a four-directional control mode, but is not limited thereto.

When the pointer 10 is located on a first item 530 as shown in FIG. 50B, the user may move the pointer 10 using the four-directional GUI 540 and select an item that the user wants. For example, when the user moves the pointer 10 located on the first item 530 downwards by manipulating the focused down button 541, the pointer 10 moves to a particular item (not shown) located below the first item 530. The items on the display can be different items on a program or application being viewed by a user.

When the up button 542 on the four-directional UI 540 is selected and is manipulated according to a user command, such as a user hand motion, as shown in FIG. 50C, the pointer 10 located on the first item 530 moves to a second item 550 located above the first item 530 as shown in FIG. 50D. For example, when the user inputs a motion to move his or her hand upwards, the focus located on the down button 541 moves to the up button 542. When the up button 542 is focused and manipulated, the pointer 10 located on the first item 530 moves to the second item 550 located above the first item 530.

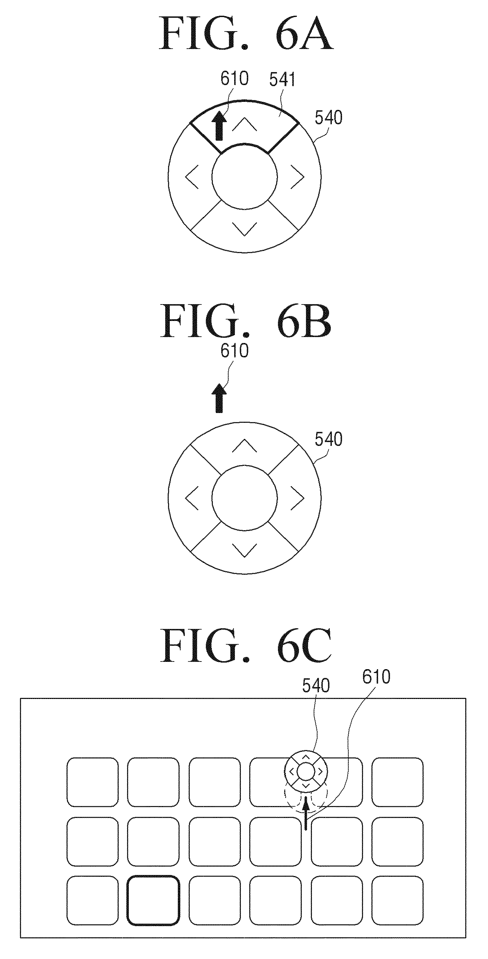

FIGs. 6A-6C illustrate a method for manipulating a four-directional GUI according to an exemplary embodiment.

As shown in FIG. 6A, a virtual pointer 610 may exist on the four-directional GUI 540. A button on the four-directional GUI 540 may be selected according to movements of the virtual pointer 610. For example, when the virtual pointer 610 moves to an area corresponding to the up button 541 on the four-directional GUI 540 as shown in FIG. 6A, the up button 541 is highlighted.

When the virtual pointer 610 moves out of the four-directional GUI 540 according to a user command as shown in FIG. 6B, the four-directional GUI 540 may move according to the movements of the virtual pointer 610.

For example, when the virtual pointer 610 moves out of the four-directional GUI 540 and moves upwards as shown in FIG. 6C, the four-directional GUI 540 moves upwards accordingly.

In FIGs. 6A and 6B, the virtual pointer 610 is displayed for convenience of description, but the virtual pointer may not necessarily be displayed. However, in some cases, it is also possible to display the virtual pointer 610 within the four-directional GUI 540 so that the user can identify the virtual pointer 610.

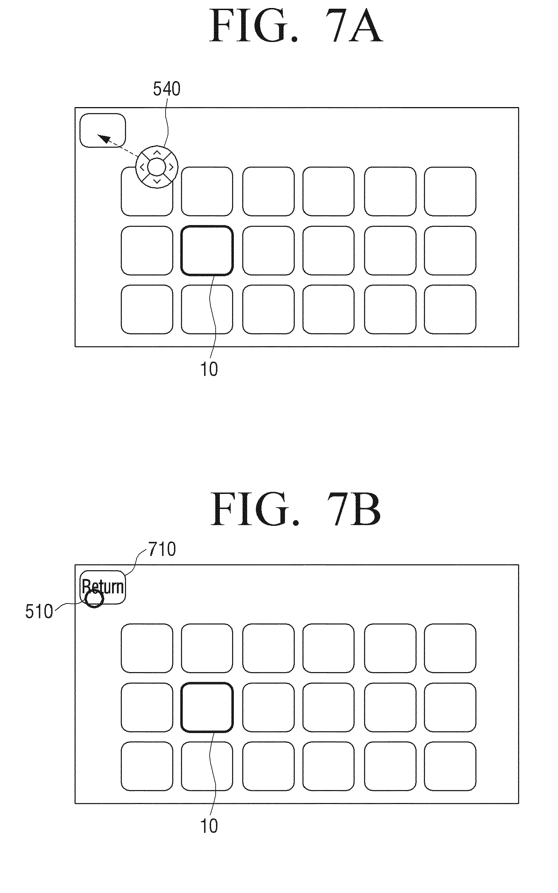

FIGs. 7A and 7B illustrate a method for providing a UI according to another exemplary embodiment.

As shown in FIGs. 7A and 7B, when the four-directional GUI 540 moves onto an item 710 controllable in the pointing control mode according to a user command, the four-directional GUI 540 is converted into the pointing GUI 510. That is, the four-directional control mode automatically changes into the pointing control mode.

The exemplary embodiment shown in FIGs. 7A and 7B is merely an example. The switch between the four-directional GUI 540 and the pointing GUI 510 may be performed by the user's particular motion or by selection of a predetermined menu (not shown) displayed on the screen.

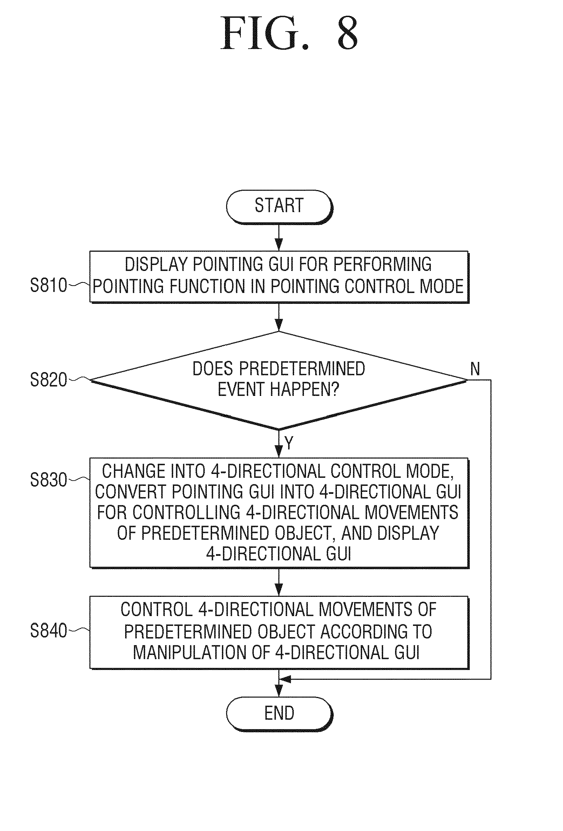

FIG. 8 is a flow chart illustrating a control method of an electronic apparatus according to an exemplary embodiment.

Firstly, in operation S810, the pointing GUI for performing the pointing function in the pointing control mode is displayed.

Subsequently, when a predetermined event happens in operation S820:Y, the pointing control mode changes into the four-directional control mode, the pointing GUI is converted into the four-directional GUI for controlling four-directional movements of a predetermined object, and the four-directional GUI is displayed in operation S830. The predetermined object may be an object to select an item in the four-directional control mode. The predetermined event may be at least one of an event in which a mode conversion menu is selected according to a user command, and an event in which a screen including the predetermined object is displayed.

In operation S840, according to manipulation of the four-directional GUI, the four-directional movements of the predetermined object are controlled.

In addition, when the four-directional GUI is located on an item which is controllable in the pointing control mode, the four-directional GUI is converted into the pointing GUI, and the four-directional control mode changes into the pointing control mode.

The four-directional GUI may include up, down, right and left buttons and a selection button. In this case, from among the up, down, right and left buttons and the selection button, a button on which the virtual pointer is located may be focused and displayed according to the movements of the virtual pointer within the four-directional GUI. In addition, when the virtual pointer moves out of the four-directional GUI, the four-directional GUI moves to the location of the virtual pointer.

The pointing GUI and the four-directional GUI may be controlled by the user's motion.

In view of the above, the manipulation method of the pointing control mode is maintained, and manipulation of movements in the four-directional control mode is supported.

The control method of an electronic apparatus according to the diverse exemplary embodiments may be implemented in a program and be provided to electronic apparatuses.

For example, a program which performs the method including when the user's motion command is input, displaying a pointing GUI to perform a pointing function in the pointing control mode, when a predetermined event happens, converting the pointing GUI into a four-directional GUI to control four-directional movements of a predetermined object, changing into the four-directional control mode, and controlling the four-directional movements of the predetermined object according to manipulation of the four-directional GUI, may be stored in a non-transitory computer readable medium.

A non-transitory computer readable medium is a medium which does not store data temporarily such as a register, cache, and memory but stores data semi-permanently and is readable by devices. More specifically, the aforementioned diverse applications or programs may be stored and provided in a non-transitory computer readable medium such as a compact disk (CD), digital video disk (DVD), hard disk, Blu-ray disk, universal serial bus (USB), memory card, and read-only memory (ROM).

The foregoing exemplary embodiments and advantages are merely exemplary and are not to be construed as limiting. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A control method of an electronic apparatus which supports a pointing control mode and a four-directional control mode, the control method comprising:
displaying a pointing graphical user interface (GUI) which performs a pointing function in the pointing control mode on a display;
converting the pointing GUI into a four-directional GUI to control four-directional movements of a predetermined object, and changing to the four-directional control mode when a predetermined event occurs; and
controlling the four-directional movements of the predetermined object according to manipulation of the four-directional GUI.

2. The method as claimed in claim 1, wherein the predetermined object selects an item displayed on the display according to manipulation of the four-directional GUI in the four-directional control mode.

3. The method as claimed in claim 1 or 2, wherein the predetermined event is one of an event in which a mode conversion menu is selected according to a user command, and an event in which a screen including the predetermined object is displayed.

4. The method as claimed in anyone of claim 1 to 3, further comprising:
converting the four-directional GUI into the pointing GUI and changing from the four-directional control mode to the pointing control mode when the four-directional GUI is located on an item displayed on the display which is controllable in the pointing control mode.

5. The method as claimed in anyone of claim 1 to 4, wherein the four-directional GUI includes an up button, a down button, a right button, a left buttons, and a selection button.

6. The method as claimed in claim 5, further comprising:
highlighting one of the up button, the down button, the right button, the left button, and the selection button of the four-directional GUI when a virtual pointer is positioned on one of the up button, the down button, the right button, the left button, and the selection button.

7. The method as claimed in claim 6, further comprising:
moving the four-directional GUI to a location of the virtual pointer when the virtual pointer is positioned outside out of the four-directional GUI when displayed on the display.

8. The method as claimed in anyone of claim 1 to 7, wherein the pointing GUI and the four-directional GUI are controlled according to a user's motion command.

9. An electronic apparatus which supports a pointing control mode and a four-directional control mode, the electronic apparatus comprising:
a display which displays a pointing graphical user interface (GUI) which performs a pointing function in the pointing control mode;
a user interface which receives a command; and
a controller which converts the pointing GUI into a four-directional GUI to control four-directional movement of a predetermined object and changes into the four-directional control mode when a predetermined event occurs, and controls the four-directional movement of the predetermined object according to manipulation of the four-directional GUI.

10. The electronic apparatus as claimed in claim 9, wherein the predetermined object selects an item displayed on the display according to manipulation of the four-directional GUI in the four-directional control mode.

11. The electronic apparatus as claimed in claim 9 or 10, wherein the predetermined event is one of an event in which a mode conversion menu is selected according to a user command, and an event in which a screen including the predetermined object is displayed.

12. The electronic apparatus as claimed in anyone of claim 9 to 11, wherein the controller changes to the pointing control mode and converts the four-directional GUI to the pointing GUI when the four-directional GUI is located on an item displayed on the display which is controllable in the pointing control mode.

13. The electronic apparatus as claimed in anyone of claim 9 to 12, wherein the four-directional GUI includes an up button, a down button, a right button, a left button, and a selection button, and the controller highlights one of the up button, the down button, the right button, the left button, and the selection button when a virtual pointer is positioned on one of the up button, the down button, the right button, the left button, and the selection button.

14. The electronic apparatus as claimed in claim 13, wherein the controller moves the four-directional GUI to a location to which of the virtual pointer when the virtual pointer is positioned outside of the four-directional GUI on the display.

15. The electronic apparatus as claimed in anyone of claim 9 to 14, wherein the pointing GUI and the four-directional GUI are controlled according to a user's motion command.
